# EUROPÄISCHE PATENTSCHRIFT

(11) **EP 3 869 061 B1**
(45) Veröffentlichungstag und Bekanntmachung des Hinweises auf die Patenterteilung: **03.08.2022**
(21) Anmeldenummer: 21157744.0
(22) Anmeldetag: 18.02.2021
(51) Int. Cl.: F16D 55/40, F16D 59/02, B60T 13/22

(54) **MEHRSTUFIGES BETÄTIGUNGSSYSTEM FÜR EINE BREMSVORRICHTUNG EINES FLURFÖRDERZEUGS**
MULTI-STAGE ACTUATING SYSTEM FOR A BRAKING DEVICE OF AN INDUSTRIAL TRUCK
SYSTÈME D'ACTIONNEMENT À PLUSIEURS ÉTAGES POUR UN DISPOSITIF DE FREINAGE D'UN CHARIOT DE MANUTENTION

(30) Priorität: 19.02.2020 DE 102020202076
(43) Veröffentlichungstag der Anmeldung: 25.08.2021
(73) Patentinhaber: Jungheinrich Aktiengesellschaft, 22047 Hamburg (DE)
(72) Erfinder: ZEIDLER, Christoph, 84032 Landshut (DE); SCHWINGSHANDL, Frank, 85368 Moosburg (DE)
(74) Vertreter: Herzog, Markus

(56) Entgegenhaltungen:
- DE-A1- 19 857 962
- US-A- 4 638 894

## Beschreibung

Die vorliegende Erfindung betrifft ein mehrstufiges Betätigungssytem für eine Bremsvorrichtung eines Flurförderzeugs, eine ein derartiges Betätigungssystem umfassende Bremsvorrichtung sowie ein eine derartige Bremsvorrichtung umfassendes Flurförderzeug.

In zahlreichen Typen von Flurförderzeugen, wie beispielsweise Gabelstaplern mit kleinen Tonnagen, werden in jüngerer Zeit häufig rein generatorisch ausgeführte Betriebsbremsen eingesetzt und lediglich für Notstopp-Situationen oder zum Zuschalten in Fällen, in welchen die generatorische Bremsvorrichtung nicht ausreicht, elektromagnetische Federspeicherbremsen vorgesehen.

Diese elektromagnetischen Federspeicherbremsen sind hierbei in der Regel trocken laufende Bremsen, welche einen relativ hohen Verschleiß bei einer regelmäßigen Verwendung aufweisen. Da die oben angesprochenen generatorischen Bremsvorrichtungen aufgrund ihrer maximal erzeugbaren Bremsleistung im realen Betrieb derartiger Fahrzeuge überraschend häufig nicht ausreichend sind, hat es sich gezeigt, dass die Federspeicherbremsen in der Praxis relativ oft zum Einsatz kommen und dadurch in kurzer Zeit stark verschleißen. Zwar sind auch stufenlos steuerbare Systeme verfügbar, diese sind jedoch wesentlich teurer in ihrer Herstellung.

Beispielhaft sei hier auf die aus der DE 31 43 607 A1, der US 3 946 837 A1, der DE 103 20 800 A1, der DE 198 57 962 A1, der US 4 638 894 A und der DE 198 57 962 A1 bekannten Vorrichtungen verwiesen.

Es ist somit die Aufgabe der vorliegenden Erfindung, ein verschleißfreies Bremssystem bereitzustellen, welches kostengünstig herzustellen ist und einen sicheren Betrieb und eine ausreichend hohe Bremskraft gewährleistet.

Zur Lösung dieser Aufgabe umfasst das erfindungsgemäße Betätigungssystem ein Gehäuse, welches an einer Seite eine Durchgangsöffnung für einen Kolben umfasst und welches intern durch wenigstens eine abschnittsweise durchbrochene Zwischenwand in eine Mehrzahl von Kammern unterteilt ist, einen mehrteilig ausgebildeten Kolben, wobei jedes der Kolbenteile im Wesentlichen in einer der Kammern in dem Gehäuse aufgenommen ist und lediglich abschnittsweise durch die jeweilige Durchbrechung einer die Kammer begrenzenden Zwischenwand bzw. die Durchgangsöffnung hindurchragt und einen Kragenabschnitt aufweist, welcher als Anlagefläche für ein jeweiliges Federelement dient, und einer Mehrzahl von Federelementen, wobei jedes der Federelemente in einer der Kammern in dem Gehäuse angeordnet und einerseits an dem Kragenabschnitt des dieser Kammer zugordneten Kolbenteils und andererseits an einer der Zwischenwände oder der der Durchgangsöffnung des Gehäuses gegenüberliegenden Endwand abgestützt ist.

Hierbei schließen die Kragenabschnitte der Kolbenteile jeweils mit der Innenwand des Gehäuses bündig ab, sodass jeweils durch einen der Kragenabschnitte, das entsprechende Kolbenteil, die Innenwand und eine der Zwischenwände des Gehäuses ein Betätigungsraum gebildet ist. Erfindungsgemäß ist jeder der Betätigungsräume mit einem Druckmediumanschluss versehen und das Betätigungssystem umfasst ferner eine Druckmediumanordnung, welche dazu eingerichtet ist, die Betätigungsräume selektiv mit einem Druckmedium zu versorgen, wobei die auf die unterschiedlichen Kolbenteile einwirkenden Federelemente dazu eingerichtet sind, eine jeweilige Federkraft in einer gleichen Richtung auszuüben. Hierbei kann es sich beispielsweise um Druckluft oder ein unter Druck stehendes Hydrauliköl handeln.

Durch das erfindungsgemäße Betätigungssystem ist ein mehrstufig negativ wirkender Betätigungszylinder geschaffen, welcher hinsichtlich wesentlicher Komponenten verschleißfrei arbeiten kann und durch verschiedenartige Druckmediumanordnungen ansteuerbar sein kann. Sind durch die jeweilige Druckmediumanordnung alle Stufen drucklos geschaltet, so kann durch die Wirkung der Federelemente eine maximale Bremswirkung erzielt werden, welche insbesondere einer Parkstellung oder einer Notbremsstellung entsprechen kann.

Im Betrieb werden die Bremsmomente der einzelnen Stufen lediglich durch die entsprechenden Federkräfte bestimmt. Solange nämlich der anliegende Druck pro Stufe groß genug ist, um die jeweilige Stufe zu lösen, das heißt ausreichend ist, um die entgegenwirkende Federkraft zu übersteigen, ist das anliegende Bremsmoment von diesem Druck unabhängig. Diese Eigenschaft des erfindungsgemäßen Systems ist insbesondere bei Temperatur- und somit Viskositäts- und Druckschwankungen im Hydrauliksystem von entsprechenden Fahrzeugen von großem Vorteil. In der bereits angesprochenen Parkstellung addieren sich hingegen lediglich die Federkräfte der einzelnen Stufen zu einem Gesamtmoment.

In einer möglichen Ausführungsform des erfindungsgemäßen Betätigungssystems kann die Druckmediumanordnung ein einzelnes Ventil mit einer Mehrzahl von Schaltstellungen umfassen, welches entsprechend mit jedem der Druckmediumanschlüsse der einzelnen Betätigungsräume verbunden ist und derart ansteuerbar ist, dass selektiv die einzelnen Betätigungsräume mit Druckmedium versorgt werden können.

In einer alternativen Ausführungsform kann die Druckmediumanordnung jedoch auch eine Mehrzahl von Absperrventilen umfassen, wobei jedes der Absperrventile mit einem der Druckmediumanschlüsse der einzelnen Betätigungsräume verbunden ist und die Absperrventile demzufolge derart koordiniert ansteuerbar sind, dass ebenfalls eine selektive Versorgung der einzelnen Betätigungsräume mit Druckmedium erzielt werden kann.

In beiden der eben genannten Ausführungsformen und gegebenenfalls auch im Zusammenwirken mit anderen denkbaren Ventilanordnungen kann die Druckmediumanordnung eine einzelne Druckmediumquelle umfassen. Alternativ wäre selbstverständlich auch ein Vorsehen einer Mehrzahl von Druckmediumquellen denkbar, wobei diese dann jeweils einem oder mehreren der Betätigungsräume zugeordnet sein können.

Wenngleich das erfindungsgemäße Betätigungssystem prinzipiell beliebig viele Stufen umfassen kann, so kann in einer besonders einfachen Ausführungsform der Kolben zweiteilig ausgebildet sein, es können zwei Federelemente vorgesehen sein, und das Gehäuse kann eine einzelne Zwischenwand aufweisen, sodass das Betätigungssystem zweistufig ist.

In dieser Ausführungsform können die beiden Federelemente entweder identisch zueinander ausgebildet sein, sodass beide Stufen im Wesentlichen gleiche Kräfte auf ihre jeweiligen Kolbenteile ausüben, oder die beiden Federelemente können auch voneinander unterschiedlich ausgebildet sein, beispielsweise derart, dass die auf die entsprechenden Kolbenteile ausgeübten Kräfte ein Verhältnis von etwa 80:20, 70:30 oder 60:40 aufweisen, wobei es sich versteht, dass die größere Kraft hierbei jeweils von einem beliebigen der beiden Federelemente und somit in der entsprechenden Stufe ausgeübt werden kann.

Wie bereits angesprochen, können sowohl in der eben beschriebenen zweistufigen Ausführungsform als auch in Ausführungsformen mit mehr als zwei Stufen die Mehrzahl von Federelementen derart ausgebildet sein, dass die auf die entsprechenden Kolbenteile ausgeübten Kräfte im Wesentlichen identisch sind, beispielsweise indem die Mehrzahl von Federelementen jeweils identisch ausgebildet sind.

Wenngleich das Gehäuse und/oder der Kolben und/oder wenigstens eine der Durchbrechungen der Zwischenwand beziehungsweise Zwischenwände prinzipiell beliebige Querschnittsformen aufweisen können, also beispielsweise einen mehreckigen oder ovalförmigen Querschnitt aufweisen können, so können sie doch in besonders bevorzugten Ausführungsformen jeweils auch im Wesentlichen kreiszylindrisch ausgebildet sein. Hierdurch werden Spannungsspitzen durch die symmetrische Kraftwirkung in alle radialen Richtungen vermieden.

Weiterhin betrifft die vorliegende Erfindung eine Bremsvorrichtung für ein Flurförderzeug, welches ein erfindungsgemäßes Betätigungssystem sowie ein Lamellenpaket umfasst, welches mittels des durch die Durchgangsöffnung des Betätigungssystems herausragenden Kolbens betätigbar ist.

Hierbei kann der Kolben direkt auf das Lamellenpaket wirken, oder es kann zwischen dem Kolben und dem Lamellenpaket eine Betätigungseinheit eingefügt sein, beispielsweise eine Keilanordnung oder eine Kugelrampe, wobei hierdurch in einigen Varianten der vorliegenden Erfindung auch noch eine Umlenkung der entsprechenden Kraft erzielt werden kann, sodass das Betätigungssystem und das Lamellenpaket unter einem Winkel zueinander angeordnet sein können, beispielsweise unter einem rechten Winkel.

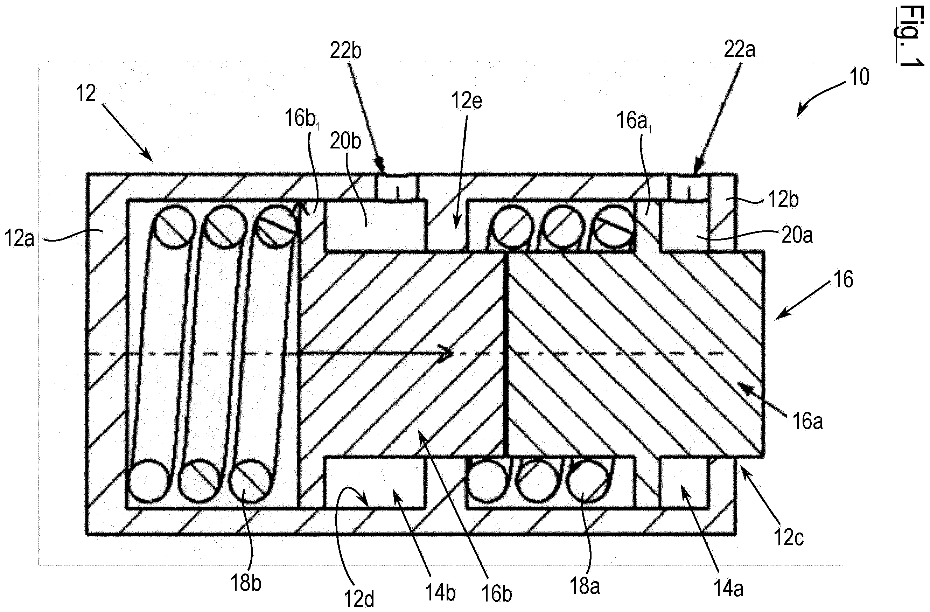

Zuletzt betrifft die vorliegende Erfindung ein Flurförderzeug, welches eine Bremsvorrichtung vom eben beschriebenen erfindungsgemäßen Typ umfasst. Weitere Merkmale und Vorteile der vorliegenden Erfindung werden aus der nachfolgenden Beschreibung einer Ausführungsform deutlich, welche als schematische Querschnittsdarstellung in der beiliegenden Figur 1 gezeigt ist.

In dieser Figur 1 ist das erfindungsgemäße Betätigungssystem ganz allgemein mit dem Bezugszeichen 10 bezeichnet. Es umfasst ein Gehäuse 12, welches im Wesentlichen eine kreiszylindrische Außenform mit einer geschlossenen ersten Grundwand 12a und einer gegenüberliegenden zweiten Grundwand 12b mit einer ebenfalls kreisförmigen Durchbrechung 12c aufweist. Des Weiteren umfasst das Gehäuse 12 eine Innenwand 12d und eine zentral kreisförmig durchbrochene Zwischenwand 12e. Durch die Zwischenwand 12e ist das Gehäuse 12 in eine erste Kammer 14a und eine zweite Kammer 14b unterteilt. Das Gehäuse 12 kann aus mehreren, beispielsweise metallischen, Teilen aufgebaut sein, die nach Installation der im Folgenden beschrieben Komponenten darin fest miteinander verbunden werden, beispielsweise verschweißt werden.

Innerhalb der beiden Kammern 14a und 14b sind zwei Kolbenteile 16a und 16b mit einem jeweils im Wesentlichen kreisförmigen Querschnitt aufgenommen, welche gemeinsam einen Kolben 16 bilden. Hierbei ragt der erste Kolbenteil 16a durch die Durchbrechung 12c aus dem Gehäuse 12 heraus, während der zweite Kolbenteil 16b in die erste Kammer 14a hineinragt und dort mit dem ersten Kolbenteil 16a im in Figur 1 dargestellten Zustand in Kontakt steht. Weiterhin umfassen die beiden Kolbenteile 16a und 16b jeweilige Kragenabschnitte 16a₁ und 16b₁, welche Anlageflächen für zwei Federelemente 18a und 18b bilden.

Hierbei ist das erste Federelement 18a wie angedeutet einerseits an dem Kragenabschnitt 16a₁ des ersten Kolbenteils 16a und andererseits an der Zwischenwand 12e des Gehäuses 12 abgestützt, während das zweite Federelement 18b einerseits an dem Kragenabschnitt 16b₁ des zweiten Kolbenteils 16b und andererseits an der Grundwand 12a des Gehäuses 12 abgestützt ist.

Durch den Körper des ersten Kolbenteils 16a, den Kragenabschnitt 16a₁ des ersten Kolbenteils 16a, die Innenwand 12d und die durchbrochene Grundwand 12b ist ein erster Betätigungsraum 20a in der ersten Kammer 14a gebildet, während in der zweiten Kammer 14b durch den Körper des zweiten Kolbenteils 16b, den Kragenabschnitt 16b₁ des zweiten Kolbenteils 16b, die Innenwand 12d und die Zwischenwand 12e des Gehäuses 12 ein zweiter Betätigungsraum 20b gebildet ist. Hierbei sind den beiden Betätigungsräumen 20a und 20b jeweilige Druckmediumanschlüsse 22a und 22b zugeordnet, wobei ferner außerhalb des Gehäuses 12 eine nicht gezeigte Druckmediumanordnung vorgesehen ist, welche dazu eingerichtet ist, über die beiden Druckmediumanschlüsse 22a und 22b die beiden Betätigungsräume 20a und 20b selektiv mit Druckmedium zu versorgen.

Im Betrieb des Betätigungssystems 10 aus Figur 1 können demzufolge die einzelnen Kolbenteile 16a und 16b stufenweise geschaltet werden, um eine Bremswirkung zu erzeugen. Hierbei entspricht die in Figur 1 gezeigte Konfiguration des Betätigungssystems 10 einem geöffneten Zustand der hiermit ausgerüsteten Bremsvorrichtung, da die beiden Kolbenteile 16a und 16b des Kolbens 16 maximal in das Gehäuse 12 eingezogen sind. Dieser Zustand wird dadurch erreicht, dass die beiden Betätigungsräume 20a und 20b jeweils mit Druckmedium beaufschlagt sind, die durch ihre Druckwirkung auf die jeweiligen Kragenabschnitte 16a₁ und 16b₁ der beiden Kolbenteile 16a und 16b diese gegen die Wirkung der Federn 18a und 18b in dem Gehäuse in der gezeigten Darstellung nach links drücken.

Es sei in diesem Zusammenhang darauf hingewiesen, dass die in Figur 1 gezeigte Darstellung als rein schematisch zu verstehen ist und dass auf die Darstellung beispielsweise von Dichtungen und Ähnlichem zum Sicherstellen des Aufrechterhaltens des anliegenden Drucks in den Betätigungsräumen 20a und 20b verzichtet worden ist.

Soll nun der Kolben 16 und insbesondere das erste Kolbenteil 16a weiter aus dem Gehäuse 12 austreten, um in Richtung des Pfeils B1 eine Kraft auf eine nachgeschaltete Stufe einer Bremsvorrichtung, beispielsweise ein Lamellenpaket, auszuüben, so kann zunächst der erste Betätigungsraum 20a drucklos geschaltet werden, sodass durch die Kraft der Feder 18a der Kolbenteil 16a aus dem Kontakt mit dem zweiten Kolbenteil 16b heraustritt und eine entsprechende Bremskraft auf das Lamellenpaket außerhalb des Gehäuses 12 einwirken kann. Sollte eine noch größere Bremskraft gewünscht sein, so kann ferner der zweite Betätigungsraum 20b ebenfalls drucklos geschaltet werden, sodass zusätzlich durch die Feder 18b eine entsprechende Kraft in Richtung des Pfeils B2 auf den zweiten Kolbenteil 16b wirkt, der dann wieder an dem ersten Kolbenteil 16a abgestützt ist, sodass sich die beiden von den Federn 18a und 18b eingewirkten Kräfte addieren. Hierbei können die Federn 18a und 18b im Wesentlichen identisch ausgebildet sein, sodass sie ebenfalls im Wesentlichen identische Bremskräfte erzeugen können, sie können in einer alternativen Ausführungsform jedoch auch unterschiedlich ausgebildet sein, sodass sie beispielsweise Bremskräfte im Verhältnis 80:20, 70:30 oder 60:40 erzeugen können, wobei der größere der beiden Werte jeweils beliebig von der ersten oder der zweiten Feder 18a, 18b ausgeübt werden kann.

Weiterhin ist festzuhalten, dass nach demselben Konstruktionsprinzip auch eine Ausführungsform mit mehr als zwei Stufen ausgeführt werden kann, indem die Gestaltung der ersten Kammer 14a mit dem darin aufgenommenen ersten Kolbenteil 16a sowie der Feder 18a ein- oder mehrfach dupliziert wird und das Gehäuse 12 dementsprechend mit einer Mehrzahl von Trennwänden nach rechts erweitert wird. Weiterhin ist festzuhalten, dass der Kolben 16 direkt oder indirekt auf das nicht gezeigte nachgeschaltete Lamellenpaket zum Ausbilden einer Bremsvorrichtung einwirken kann, wobei ferner im indirekten Fall durch eine zwischengeschaltete Betätigungseinheit auch eine Umlenkung der Kraft vorgesehen werden kann.

## Patentansprüche

1. Mehrstufiges Betätigungssystem (10) für eine Bremsvorrichtung eines Flurförderzeugs, umfassend:
- ein Gehäuse (12), welches an einer Seite eine Durchgangsöffnung (12c) für einen Kolben (16) umfasst und welches intern durch wenigstens eine abschnittsweise durchbrochene Zwischenwand (12e) in eine Mehrzahl von Kammern (14a, 14b) unterteilt ist;
- einen mehrteilig ausgebildeten Kolben (16), wobei jeder der Kolbenteile (16a, 16b) im Wesentlichen in einer der Kammern (14a, 14b) in dem Gehäuse (12) aufgenommen ist und lediglich abschnittsweise durch die jeweilige Durchbrechung einer die Kammer (14a, 14b) begrenzenden Zwischenwand (12e) bzw. die Durchgangsöffnung (12c) hindurchragt und einen Kragenabschnitt (16a₁, 16b₁) aufweist, welcher als Anlagefläche für ein jeweiliges Federelement (18a, 18b) dient; und
- eine Mehrzahl von Federelementen (18a, 18b), wobei jedes der Federelemente (18a, 18b) in einer der Kammern (14a, 14b) in dem Gehäuse (12) angeordnet und einerseits an dem Kragenabschnitt (16a₁, 16b₁) des dieser Kammer (14a, 14b) zugeordneten Kolbenteils (16a, 16b) und andererseits an einer der Zwischenwände (12e) oder der der Durchgangsöffnung (12c) des Gehäuses (12) gegenüberliegenden Endwand (12a) abgestützt ist;
wobei die Kragenabschnitte (16a₁, 16b₁) der Kolbenteile (16a, 16b) jeweils mit der Innenwand (12d) des Gehäuses (12) bündig abschließen, so dass jeweils durch einen der Kragenabschnitte (16a₁, 16b₁), das entsprechende Kolbenteil (16a, 16b), die Innenwand (12d) und eine der Zwischenwände (12e) bzw. die die Durchgangsöffnung (12c) aufweisende Endwand (12b) des Gehäuses (12) ein Betätigungsraum (20a, 20b) gebildet ist;
wobei jeder der Betätigungsräume (20a, 20b) mit einem Druckmediumanschluss (22a, 22b) versehen ist und das Betätigungssystem (10) ferner eine Druckmediumanordnung umfasst, welche dazu eingerichtet ist, die Betätigungsräume (20a, 20b) selektiv mit Druckmedium zu versorgen, wobei die auf die unterschiedlichen Kolbenteile (16a, 16b) einwirkenden Federelemente (18a, 18b) dazu eingerichtet sind, eine jeweilige Federkraft in einer gleichen Richtung auszuüben.

2. Betätigungssystem (10) nach Anspruch 1,
wobei die Druckmediumanordnung ein einzelnes Ventil mit einer Mehrzahl von Schaltstellungen umfasst, welches entsprechend mit jedem der Druckmediumanschlüsse (22a, 22b) der einzelnen Betätigungsräume (20a, 20b) verbunden ist.

3. Betätigungssystem (10) nach Anspruch 1,
wobei die Druckmediumanordnung eine Mehrzahl von Absperrventilen umfasst, wobei jedes der Absperrventile mit einem der Druckmediumanschlüsse (22a, 22b) der einzelnen Betätigungsräume (20a, 20b) verbunden ist.

4. Betätigungssystem (10) nach einem der vorhergehenden Ansprüche,
wobei die Druckmediumanordnung eine einzelne Druckmediumquelle umfasst.

5. Betätigungssystem (10) nach einem der vorhergehenden Ansprüche,
wobei der Kolben (16) zweiteilig ausgebildet ist, zwei Federelemente (18a, 18b) vorgesehen sind und das Gehäuse (12) eine einzelne Zwischenwand (12e) aufweist.

6. Betätigungssystem (10) nach Anspruch 5, wobei die beiden Federelemente (18a, 18b) voneinander unterschiedlich ausgebildet sind, beispielsweise derart, dass die auf die entsprechenden Kolbenteile (16a, 16b) ausgeübten Kräfte ein Verhältnis von etwa 80:20, 70:30 oder 60:40 aufweisen.

7. Betätigungssystem (10) nach einem der Ansprüche 1 bis 5, dass die Mehrzahl von Federelementen (18a, 18b) derart ausgebildet sind, dass die auf die entsprechenden Kolbenteile (16a, 16b) ausgeübten Kräfte im Wesentlich identisch sind, beispielsweise indem die Mehrzahl von Federelementen (18a, 18b) jeweils identisch ausgebildet sind.

8. Betätigungssystem (10) nach einem der vorhergehenden Ansprüche,
wobei das Gehäuse (12) und/oder der Kolben (16) und/oder wenigstens eine, vorzugsweise alle, der Durchbrechungen der Zwischenwand (12e) bzw. Zwischenwände im Wesentlichen kreiszylindrisch ausgebildet ist/sind.

9. Bremsvorrichtung für ein Flurförderzeug, umfassend ein Betätigungssystem (10) nach einem der vorhergehenden Ansprüche sowie ein Lamellenpaket, welches mittels des durch die Durchgangsöffnung (12c) des Betätigungssystems (10) herausragenden Kolben (16) betätigbar ist.

10. Bremsvorrichtung nach Anspruch 9,
wobei zwischen dem Kolben (16) und dem Lamellenpaket eine Betätigungseinheit eingefügt ist, beispielsweise eine Keilanordnung oder eine Kugelrampe.

11. Flurförderzeug, umfassend eine Bremsvorrichtung nach einem der Ansprüche 9 und 10.

## Claims

1. Multi-stage actuating system (10) for a braking device of an industrial truck, comprising:
- a housing (12) which on one side comprises a through-opening (12c) for a piston (16) and which is internally divided into a plurality of chambers (14a, 14b) by at least one intermediate wall (12e) which is perforated in portions;
- a multi-part piston (16), wherein each of the piston parts (16a, 16b) is substantially accommodated in one of the chambers (14a, 14b) in the housing (12) and only projects only in portions through the relevant opening in an intermediate wall (12e) delimiting the chamber (14a, 14b) or through the through-opening (12c) and has a collar portion (16a₁, 16b₁) which is used as a contact surface for a relevant spring element (18a, 18b); and
- a plurality of spring elements (18a, 18b), wherein each of the spring elements (18a, 18b) is arranged in one of the chambers (14a, 14b) in the housing (12) and is supported on the collar portion (16a₁, 16b₁) of the piston part (16a, 16b) associated with said chamber (14a, 14b) and on one of the intermediate walls (12e) or the end wall (12a) opposite the through-opening (12c) of the housing (12);
wherein the collar portions (16a₁, 16b₁) of the piston parts (16a, 16b) each end flush with the inner wall (12d) of the housing (12), such an actuation space (20a, 20b) is formed in each case by one of the collar portions (16a₁, 16b₁), the corresponding piston part (16a, 16b), the inner wall (12d) and one of the intermediate walls (12e) or the end wall (12b) of the housing (12) that has the through-opening (12c);
wherein each of the actuation spaces (20a, 20b) is provided with a pressure medium connection (22a, 22b) and the actuating system (10) further comprises a pressure medium assembly which is designed to selectively supply the actuation spaces (20a, 20b) with pressure medium, wherein the spring elements (18a, 18b) acting on the different piston parts (16a, 16b) are designed to exert a relevant spring force in the same direction.

2. Actuating system (10) according to claim 1,
wherein the pressure medium assembly comprises a single valve which has a plurality of switching positions and is correspondingly connected to each of the pressure medium connections (22a, 22b) of the individual actuation spaces (20a, 20b).

3. Actuating system (10) according to claim 1,
wherein the pressure medium assembly comprises a plurality of shut-off valves, wherein each of the shut-off valves is connected to one of the pressure medium connections (22a, 22b) of the individual actuation spaces (20a, 20b).

4. Actuating system (10) according to any of the preceding claims,
wherein the pressure medium assembly comprises a single pressure medium source.

5. Actuating system (10) according to any of the preceding claims,
wherein the piston (16) is formed in two parts, two spring elements (18a, 18b) are provided, and the housing (12) has a single intermediate wall (12e).

6. Actuating system (10) according to claim 5, wherein the two spring elements (18a, 18b) are designed differently from one another, for example such that the forces exerted on the corresponding piston parts (16a, 16b) have a ratio of approximately 80:20, 70:30 or 60:40.

7. Actuating system (10) according to any of claims 1 to 5,
that the plurality of spring elements (18a, 18b) are designed such that the forces exerted on the corresponding piston parts (16a, 16b) are substantially identical, for example by the plurality of spring elements (18a, 18b) being designed identically in each case.

8. Actuating system (10) according to any of the preceding claims,
wherein the housing (12) and/or the piston (16) and/or at least one, preferably all, of the openings in the intermediate wall (12e) or intermediate walls is/are substantially circular-cylindrical.

9. Braking device for an industrial truck, comprising an actuating system (10) according to any of the preceding claims and a disk pack which can be actuated by means of the piston (16) protruding through the through-opening (12c) of the actuating system (10).

10. Braking device according to claim 9,
wherein an actuating unit, for example a wedge assembly or a ball ramp, is inserted between the piston (16) and the disk pack.

11. Industrial truck comprising a braking device according to either claim 9 or claim 10.

## Revendications

1. Système d'actionnement (10) à plusieurs étapes pour un dispositif de freinage d'un chariot de manutention, comprenant :
- un boîtier (12) qui comprend sur un côté une ouverture de passage (12c) pour un piston (16) et qui est divisé à l'intérieur en une pluralité de chambres (14a, 14b) par au moins une paroi intermédiaire (12e) percée par sections ;
- un piston (16) réalisé en plusieurs parties, dans lequel chacune des parties de piston (16a, 16b) est logée essentiellement dans l'une des chambres (14a, 14b) dans le boîtier (12) et ne dépasse que par sections à travers le percement respectif d'une paroi intermédiaire (12e) délimitant la chambre (14a, 14b) ou l'ouverture de passage (12c) et présentant une section de collerette (16a₁, 16b₁) qui sert de surface d'appui pour un élément de ressort respectif (18a, 18b) ; et
- une pluralité d'éléments de ressort (18a, 18b), dans lequel chacun des éléments de ressort (18a, 18b) est disposé dans l'une des chambres (14a, 14b) dans le boîtier (12) et s'appuie d'une part sur la section de collerette (16a₁, 16b₁) de la partie de piston (16a, 16b) associée à cette chambre (14a, 14b) et d'autre part sur l'une des parois intermédiaires (12e) ou la paroi d'extrémité (12a) opposée à l'ouverture de passage (12c) du boîtier (12) ;
dans lequel les sections de collerette (16a₁, 16b₁) des parties de piston (16a, 16b) se terminent chacune à fleur de la paroi intérieure (12d) du boîtier (12), de sorte que chaque fois, par l'une des sections de collerette (16a₁, 16b₁), la partie de piston (16a, 16b) correspondante, la paroi intérieure (12d) et l'une des parois intermédiaires (12e) ou la paroi d'extrémité ('12b) du boîtier (12) présentant l'ouverture de passage (12c), un espace d'actionnement (20a, 20b) est formé ; dans lequel chacun des espaces d'actionnement (20a, 20b) est pourvu d'un raccord de fluide sous pression (22a, 22b) et le système d'actionnement (10) comprend en outre un agencement de fluide sous pression adapté pour alimenter sélectivement les espaces d'actionnement (20a, 20b) en fluide sous pression,
dans lequel les éléments de ressort (18a, 18b) agissant sur les différentes parties de piston (16a, 16b) sont adaptés pour exercer une force de ressort respective dans une même direction.

2. Système d'actionnement (10) selon la revendication 1,
dans lequel l'agencement de fluide sous pression comprend une seule vanne ayant une pluralité de positions de commutation et connectée respectivement à chacun des raccords de fluide sous pression (22a, 22b) des espaces d'actionnement individuels (20a, 20b).

3. Système d'actionnement (10) selon la revendication 1, dans lequel l'agencement de fluide sous pression comprend une pluralité de vannes d'arrêt, dans lequel chacune des vannes d'arrêt est reliée à l'un des raccords de fluide sous pression (22a, 22b) des espaces d'actionnement individuels (20a, 20b).

4. Système d'actionnement (10) selon l'une quelconque des revendications précédentes, dans lequel l'agencement de fluide sous pression comprend une source unique de fluide sous pression.

5. Système d'actionnement (10) selon l'une des revendications précédentes, dans lequel le piston (16) est réalisé en deux parties, deux éléments de ressort (18a, 18b) sont prévus et le boîtier (12) comporte une seule paroi intermédiaire (12e).

6. Système d'actionnement (10) selon la revendication 5, dans lequel les deux éléments de ressort (18a, 18b) sont différents l'un de l'autre, par exemple de telle sorte que les forces exercées sur les parties correspondantes du piston (16a, 16b) présentent un rapport d'environ 80 : 20, 70 : 30 ou 60 : 40.

7. Système d'actionnement (10) selon l'une quelconque des revendications 1 à 5, **caractérisé en ce que** la pluralité d'éléments de ressort (18a, 18b) sont configurés de telle sorte que les forces exercées sur les parties de piston (16a, 16b) correspondantes sont sensiblement identiques, par exemple **en ce que** la pluralité d'éléments de ressort (18a, 18b) sont respectivement configurés de manière identique.

8. Système d'actionnement (10) selon l'une des revendications précédentes, dans lequel le boîtier (12) et/ou le piston (16) et/ou au moins l'une, de préférence la totalité, des ouvertures de la ou des parois intermédiaires (12e) est/sont sensiblement de forme cylindrique circulaire.

9. Dispositif de freinage pour un chariot de manutention, comprenant un système d'actionnement (10) selon l'une des revendications précédentes, ainsi qu'un paquet de lamelles qui peut être actionné au moyen du piston (16) faisant saillie à travers l'ouverture de passage (12c) du système d'actionnement (10).

10. Dispositif de freinage selon la revendication 9,
dans lequel un agencement d'actionnement, par exemple un agencement de cales ou une rampe à billes, est interposé entre le piston (16) et le paquet de lamelles.

11. Chariot de manutention comprenant un dispositif de freinage selon l'une des revendications 9 et 10.
